(19) Europäisches Patentamt
European Patent Office
Office européen des brevets

(11) **EP 3 181 726 A1**

(12) **EUROPEAN PATENT APPLICATION**

(43) Date of publication:
**21.06.2017 Bulletin 2017/25**

(51) Int Cl.:
***C23C 18/24*** *(2006.01)*     ***C09K 13/04*** *(2006.01)*

(21) Application number: **15201063.3**

(22) Date of filing: **18.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Atotech Deutschland GmbH 10553 Berlin (DE)**

(72) Inventors:
• **Dyrbusch, Brigitte 12207 Berlin (DE)**
• **Fels, Carl Christian, Dr. 10967 Berlin (DE)**
• **Bayer, Frank, Dr. 14167 Berlin (DE)**
• **Finn, Franziska 10247 Berlin (DE)**
• **Naruskevicius, Leonas 10311 Vilnius (LT)**

(54) **ETCHING SOLUTION FOR TREATING NONCONDUCTIVE PLASTIC SURFACES AND PROCESS FOR ETCHING NONCONDUCTIVE PLASTIC SURFACES**

(57)     An etching solution for treating electrically nonconductive plastic surfaces of articles comprising phosphoric acid, sulphuric acid, water and at least one oxidising agent suitable to oxidise an electrically nonconductive plastic surface characterised in that the molar ratio of water to sulphuric acid in the etching solution ranges from 1/1 to 2/1 and wherein the concentration of sulphuric acid ranges from 5.29 mol/l to 8.50 mol/l sulphuric acid. Such etching solutions are stable over a prolonged time and thus particularly cost-efficient as well as ecologically benign. Plastic surfaces treated with such etching solutions yield excellent adhesion strength of subsequently formed metal layers thereon.

**Description**

**Field of the Invention**

The present invention relates to an etching solution, its use for treating electrically nonconductive plastic surfaces of articles and a process for etching such articles employing said etching solution. After the treatment with the etching solution, the articles can be metallized by means of known processes.

**Background of the Invention**

Articles made from electrically nonconductive plastic can be metallized by an electroless metallization process. In this process, the article is first cleaned and etched, then treated with a noble metal and finally metallized. The etching is conventionally carried out with chromosulphuric acid. The etching serves to make the surface of the article receptive to the subsequent metallization, such that the surfaces of the articles are well-wetted with the respective solutions in the subsequent treatment steps and the deposited metal ultimately has sufficiently firm adhesion on the surface.

For etching, the surface of articles, for example made from acrylonitrile-butadiene-styrene copolymer (ABS copolymer), is etched using chromosulphuric acid, so as to form surface microcaverns in which metal is deposited and subsequently adheres there firmly. After etching, the plastic can then be activated for the electroless metallization by means of an activator comprising a noble metal, and then metallized electrolessly. Subsequently, a thicker metal layer can also be applied electrolytically.

Hexavalent chromium compounds are carcinogenic and should therefore be replaced wherever possible. This also applies to chromosulphuric acid etching solutions. In the art, there are described manifold attempts to replace etching solutions based on chromosulphuric acid with other oxidising agents.

The use of permanganates in an alkaline medium for metallization of circuit boards as a carrier of electronic circuits has long been established. Since the hexavalent state (manganate) which arises in the oxidation is water-soluble and has sufficient stability under alkaline conditions, the manganate, similarly to trivalent chromium, can be oxidized electrolytically back to the original oxidizing agent, in this case the permanganate. The document DE 196 11 137 A1 describes the use of the permanganate also for metallization of other plastics than circuit board material. For the metallization of ABS plastics, a solution of alkaline permanganate has been found to be unsuitable since it was not possible in this way to obtain reliable, sufficient adhesion strength between metal layer and plastic substrate. This adhesion strength is determined in the "peel test". It should have at least a value of 0.4 N/mm. Generally, alkaline solutions comprising permanganate suffer from the formation of manganese dioxide which forms a dark colloidal precipitate which cannot be removed easily. This decisively limits the usefulness of such solutions. The combination of permanganate and other oxidising agents such as chlorite has been disclosed in US 4,629,636 to prevent sludge formation. However, the adhesion strength of metal layers on plastic articles treated therewith still is too low to be used technically.

Acidic permanganate solutions are said to be suitable for use in plastic galvanization. EP 1 001 052 discloses *inter alia* sulphuric acid solutions containing permanganate. The solutions described in EP 1 001 052 are unstable and the adhesion strength values of metal layers on such treated articles are insufficient. A constant quality of the metallization therefore cannot be achieved.

As an alternative to chromosulphuric acid, WO 2009/023628 A2 proposes strongly acidic solutions comprising an alkali metal permanganate salt. The solution contains about 20 g/l alkali metal permanganate salt in 40 - 85 wt.-% phosphoric acid. Such solutions form colloidal manganese(IV) species which are difficult to remove. According to WO 2009/023628 A2, the effect of the colloids even after a short time is that metallization of adequate quality is no longer possible. To solve the problem, WO 2009/023628 A2 proposes using manganese(VII) sources which do not contain any alkali metal or alkaline earth metal ions. However, the preparation of such manganese(VII) sources is costly and inconvenient.

The document WO 2013/135864 relates to solutions comprising permanganate and an acid in low concentrations to stabilise the etching solution. However, daily analyses are still required to guarantee the outcome of the etching process. This is undesired and not always possible. Longer life-times of etching solutions are thus required.

EP 2 009 142 B8 therefore reports the use of 0.01 to 10 g/l permanganate and 1 to 200 g/l of a second oxidising agent selected from halogen oxo-compounds such as hypochlorite and perchlorate, persulphate and bismuthates in sulphuric acid or hydrochloric acid. However, such solutions either result in low adhesion strength values and/or low life-time of the etching solutions (see comparative examples 4 and 5). Furthermore, the use of manganese compounds in combination with hydrochloric acid possibly results in the formation of chlorine gas which is very toxic and difficult to control in an industrial environment. Such solutions are thus industrially inapplicable.

As an alternative to permanganate based etching solutions, other oxidising agents have been used. Chlorate and vanadate in 50-80 vol.-% sulphuric acid and optionally low amounts of phosphoric acid can be used and have been published by WO 2013/182590 and WO 2014/087004. The use of such etching solutions, however, is limited by the short life-time (see comparative example 3). Particularly, the limited life-time of etching solutions known in the art poses a serious challenge to manufacturers as these etching solutions have to be replenished too often resulting in an intense economic and ecological impact due to scrap production and chemical waste accumulation. Therefore, toxic chromo-sulphuric acid is still being used for etching treatment of plastics.

**Objective of the present Invention**

It is therefore an objective of the present invention to provide an etching solution, its use for treating electrically nonconductive plastic surfaces of articles prior to metallization and a process for etching such articles employing said etching solution prior to metallization.

The present invention is therefore based on the problem that it has not been possible to date to achieve metallization of articles made from electrically non-conductive plastic in an environmentally safe manner with sufficient process reliability and adhesion strength of the metal layers applied subsequently.

It is therefore an object of the present invention to find etching solutions for electrically nonconductive plastic surfaces of articles, these being non-toxic but providing sufficient adhesion strength of the metal layers applied on the plastic surface while being stable over a prolonged period of time such as at least 7 days which results in a simplification of such processes.

**Summary of the Invention**

These objectives are being solved by the etching solution according to claim 1, its use for treating electrically nonconductive plastic surfaces of articles according to claim 12 and the process according to claim 13. Preferred embodiments of the present invention can be found in the dependent claims.

The etching solution for treating electrically nonconductive plastic surfaces of articles comprises phosphoric acid, sulphuric acid, water and at least one oxidising agent suitable to oxidise an electrically nonconductive plastic surface characterised in that the molar ratio of water to sulphuric acid in the etching solution ranges from 1/1 to 2/1 and wherein the concentration of sulphuric acid ranges from 5.29 mol/l to 8.50 mol/l.

The etching solution according to the invention is used to treat electrically non-conductive plastic surfaces of articles, preferably prior to metallization.

The process for treating electrically nonconductive plastic surfaces of articles according to the invention comprises, in this order, the process steps of:

   A) Providing an electrically nonconductive plastic surface;
   B) Treating said electrically nonconductive plastic surface with an etching solution according to the invention.

**Detailed Description of the Invention**

Percentages throughout this specification are weight-percentages (wt.-%) unless stated otherwise. Concentrations given in this specification refer to the volume of the entire solution unless stated otherwise. At least one means one or more than one.

The etching solution according to the invention comprises phosphoric acid, sulphuric acid, water and at least one oxidising agent suitable to oxidise an electrically nonconductive plastic surface and is characterised in that the molar ratio of water to sulphuric acid in the etching solution ranges from 1/1 to 2/1 and wherein the concentration of sulphuric acid ranges from 5.29 mol/l to 8.50 mol/l sulphuric acid.

The molar ratio of water to sulphuric acid in the etching solution ranges preferably from 1/1 to 1.6/1, more preferably from 1.1/1 to 1.5/1 and even more preferably from 1.2/1 to 1.4/1. These preferred molar ratios of water to sulphuric acid in the etching solution result in even more stable etching solutions (see examples 1 to 4). The molar ratio of water to sulphuric acid is defined herein as the quotient of amount of substance of water $n(H_2O)$ and amount of substance of sulphuric acid $n(H_2SO_4)$

$$\text{molar ratio of water to sulphuric acid} = n(H_2O) / n(H_2SO_4)$$

The term "sulphuric acid" in the description and in the claims relates to the chemical entity $H_2SO_4$ ("dihydrogensulphate") and it is not to be understood as the "concentrated sulphuric acid solution" which is herein defined as the commercially available 98 wt.-% solution of $H_2SO_4$ with the remainder being water. The term "phosphoric acid" in the description and in the claims relates to the chemical entity $H_3PO_4$ ("trihydrogenphosphate") and it is not to be understood as the "concentrated phosphoric acid solution" which is defined herein as 85 wt.-% solution of $H_3PO_4$ with the remainder being water.

The etching solution according to the invention comprises preferably 8.50 to 10.58 mol/l water. Accordingly, the etching solution according to the invention comprises concentration ranges of 5.29 mol/l sulphuric acid and 10.58 mol/l water (molar ratio of water to sulphuric acid 2/1) to 8.50 mol/l sulphuric acid and 8.50 mol/l water (molar ratio of water to sulphuric acid 1/1) and the proviso that the molar ratio of water to sulphuric acid ranges from 2/1 to 1/1. More preferably, the etching solution according to the invention preferably comprises 6.24 mol/l sulphuric acid and 9.98 mol/l water (molar ratio of water to sulphuric acid 1.6/1) to 8.50 mol/l sulphuric acid and 8.50 mol/l water (molar ratio of water to sulphuric acid 1/1) and the proviso that the molar ratio of water to sulphuric acid ranges from 1.6/1 to 1/1. Even more preferably, the etching solution according to the invention preferably comprises 6.52 mol/l sulphuric acid and 9.78 mol/l water (molar ratio of water to sulphuric acid 1.5/1) to 8.0 mol/l sulphuric acid and 8.8 mol/l water (molar ratio of water to sulphuric acid 1.1/1) and the proviso that the molar ratio of water to sulphuric acid ranges from 1.5/1 to 1.1/1. Yet even more preferably, the etching solution according to the invention preferably comprises 6.84 mol/l sulphuric acid and 9.58 mol/l water (molar ratio of water to sulphuric acid 1.4/1) to 7.58 mol/l sulphuric acid and 9.10 mol/l water (molar ratio of water to sulphuric acid 1.2/1) and the proviso that the molar ratio of water to sulphuric acid ranges from 1.4/1 to 1.2/1.

The concentration of phosphoric acid in the etching solution may range from 7.8 to 10.5 mol/l or from 7.85 to 9.7 mol/l or from 7.85 to 9.45 mol/l or from 8.2 to 9.2 mol/l.

The etching solution according to the invention is acidic and comprises both phosphoric acid and sulphuric acid and can be prepared as described hereinafter. A base solution may be prepared by mixing phosphoric acid and sulphuric acid, preferably added as concentrated phosphoric acid solution and concentrated sulphuric acid solution. Therein, the concentration of concentrated phosphoric acid solution preferably ranges from 537.6 to 712.3 ml/l with the balance to one litre (1 l) being concentrated sulphuric acid solution. Oxidising agent and other additives such as copper ions may then be added and the concentration of all components may suitably be adjusted if required.

The etching solution according to the invention comprises at least one oxidising agent suitable to oxidise an electrically nonconductive plastic surface selected from the group consisting of sources of halogen oxo ions of the formula $XO_n^-$ wherein X is a halogen atom selected from chlorine, bromine, iodine and n is an integer ranging from 1 to 4, preferably n is 3 or 4; sources of permanganate ions; sources of nitrate; vanadium compounds; sources of persulphate; sources of peroxodiphosphate; sources of molybdates and sources of bismuthates.

Sources of halogen oxo ions of the formula $XO_n^-$ wherein X is a halogen atom selected from chlorine, bromine, iodine and n is an integer ranging from 1 to 4 can be any water soluble salt or acid containing such ion. These ions include *inter alia* hypochlorite ions (ClO-), chlorite ions $(ClO_2^-)$, chlorate ions $(ClO_3^-)$, perchlorate ions $(ClO_4^-)$ and the respective bromine and iodine derivatives thereof such as hypobromite ions, bromite ions, bromate ions, perbromate ions, hypoiodite ions, iodite ions, iodate ions, periodate ions (including meta-periodate ions or other analogues thereof). Suitable sources thus can be metal hypochlorites such as alkaline hypochlorites, metal chlorites such as alkaline chlorites, metal chlorates such as alkaline chlorates, metal perchlorates such as alkaline perchlorates, the respective bromine and iodine derivatives thereof, the respective acids and ammonium salts, hydrates and water addition homologues (e.g. $H_5IO_6$) thereof. The concentration of halogen oxo ions preferably ranges from 0.1 to 150 g/l.

Sources of permanganate ions can be any water-soluble permanganate salt or acid. Preferably, permanganic acid ($HMnO_4$), alkali permanganates such as lithium, sodium, potassium, rubidium and caesium permanganate and earth alkaline permanganates such as magnesium, calcium, strontium and barium permanganate are used in the context of the present invention. The concentration of permanganate ions preferably ranges from 0.01 to 10 g/l.

The vanadium compounds can be any water-soluble vanadium salt or vanadium based acid. Preferably, vanadium pentoxide ($V_2O_5$), vanadic acid ($HVO_3$) and alkali vanadate such as lithium, sodium, potassium, rubidium and caesium vanadate are used in the context of the present invention. Vanadates are to be understood herein as orthovanadates $(VO_4^{3-})$, pyrovanadates $(V_2O_7^{4-})$, decavanadate $(V_{10}O_{28}^{6-})$, metavanadates ( $\left[VO_3\right]_m^{m-}$ with m being an integer ranging preferably from 1 to 10) and other oligomeric and polymeric structures containing vanadium in the oxidation state +5 and oxygen. The concentration of vanadium compounds preferably ranges from 0.01 to 10 g/l.

The source of nitrate can be any water-soluble nitrate containing compound. Preferably, the source of nitrate is selected from nitric acid and alkali nitrates such as lithium, sodium, potassium, rubidium and caesium nitrate. The concentration of nitrate preferably ranges from 0.1 to 40 g/l. The use of sources of nitrate as the (sole) oxidising agent is less preferred as the formation of gaseous nitrogen oxide compounds cannot always be prevented.

The source of persulphate can be any water-soluble persulphate containing compound. Preferably, the source of persulphate is selected from persulphuric acid, ammonium persulphate and alkali persulphates such as lithium, sodium, potassium, rubidium and caesium persulphate. The concentration of persulphate preferably ranges from 1.0 to 25 g/l.

The source of peroxodiphosphate can be any water-soluble peroxodiphosphate containing compound. Preferably, the source of peroxodiphosphate is selected from peroxodiphosphoric acid and alkali peroxodiphosphates such as lithium, sodium, potassium, rubidium and caesium peroxodiphosphate. The concentration of peroxodiphosphate preferably ranges from 1.0 to 25 g/l.

The source of molybdate ($MoO_4^{2-}$) can be any water-soluble molybdate containing compound or any compound suitable to form molybdate ions in solution. Preferably, the source of molybdate is selected from alkali molybdates such as lithium, sodium, potassium, rubidium and caesium molybdate and the respective peroxomolydates. The concentration of molybdate preferably ranges from 1.0 to 5.0 g/l.

The sources of bismuthate can be any water-soluble bismuthate containing compound. Preferably, the source of bismuthate is selected from bismuthate acid and alkali bismuthate such as lithium, sodium, potassium, rubidium and caesium bismuthate. The concentration of bismuthate preferably ranges from 0.5 to 5.0 g/l.

Preferably, the at least one oxidising agent is selected from the group consisting of sources of chlorate ions, sources of permanganate ions, sources of periodate ions, sources of perchlorate ions and vanadium compounds.

Sources of chlorate ions can be any water-soluble chlorate salt. Preferably, chloric acid ($HClO_3$), ammonium chlorate and alkali chlorates such as lithium, sodium, potassium, rubidium and caesium chlorate are used in the context of the present invention. The concentration of chlorate ions preferably ranges from 0.4 to 4 g/l.

Sources of periodate ions can be any water-soluble periodate salt. Preferably, ammonium periodate, meta-periodic acid ($HIO_4$), ortho-periodic acid ($H_5IO_6$ which forms periodate ions in solution) and alkali periodate salts such as lithium, sodium, potassium, rubidium and caesium periodate are used in the context of the present invention. The concentration of periodate ions preferably ranges from 0.1 to 25 g/l.

Sources of perchlorate ions can be any water-soluble perchlorate salt. Preferably, ammonium perchlorate, perchloric acid and alkali perchlorate salts such as lithium, sodium, potassium, rubidium and caesium perchlorate are used in the context of the present invention. The concentration of perchlorate ions preferably ranges from 0.1 to 150 g/l.

The etching solution according to the invention preferably comprises more than one oxidising agent. This advantageously improves the etching results, also by prolonging the time prior to which oxidising agents may have to be replenished. It is even more preferred that the etching solution according to the invention comprises two or more oxidising agents with the proviso that at least one of said oxidising agents is selected from the group consisting of sources of chlorate ions, sources of perchlorate ions, sources of permanganate ions, sources of periodate ions and vanadium compounds. Even more preferred, two or more oxidising agents selected from the group consisting of sources of chlorate ions, sources of perchlorate ions, sources of permanganate ions, sources of periodate ions and vanadium compounds are being used. Yet even more preferred, the etching solution according to the invention comprises at least one source of chlorate ions and a second oxidising agent selected from sources of perchlorate ions, sources of permanganate ions, sources of periodate ions and vanadium compounds. The use of chlorate ions results surprisingly in an improved adhesion compared to chlorate-free etching solutions (see examples 1 and 2 corresponding to etching solutions #1 and #2, respectively). In one particularly preferred embodiment of the present invention, the etching solution comprises a source of chlorate ions, a source of periodate ions and optionally, a source of permanganate ions and phosphoric acid and sulphuric acid in the above-described concentrations with the provisos that the molar ratio of water to sulphuric acid ranges from 1/1 to 2/1 and wherein the concentration of sulphuric acid ranges from 5.29 mol/l to 8.50 mol/l sulphuric acid.

The etching solution according to the invention is free of intentionally added hexavalent chromium compounds (disregarding any trace impurities commonly present in technical raw materials). In an even more preferred embodiment of the present invention, it is free of any intentionally added chromium compounds including trivalent chromium compounds (disregarding any trace impurities commonly present in technical raw materials) as their conversion into hexavalent chromium compounds by the oxidising agents present in the etching solution cannot always be prevented. The etching solution according to the invention is also preferably free of intentionally added hydrochloric acid as hydrochloric acid may react with permanganate and chlorate forming chlorine gas which is detrimental to the safety of the work environment. The term "free of" in the above-defined cases means herein that the compound is not intentionally added and preferably contained in a concentration of less than 0.1 wt.-%, more preferably less than 0.01 wt.-%. Impurities present in technical raw materials, however, cannot always be excluded.

The etching solution according to the invention may further comprise a source of copper ions as stabilising agent to further stabilise the etching solution. This is particularly useful when using permanganate and/or chlorate ions as oxidising agents. Suitable sources of copper ions can be any water soluble copper salt wherein the copper may be in oxidation state +1 or +2, preferably selected from copper sulphate, copper halides such as copper fluoride, copper chloride, copper bromide, copper iodide, copper phosphate, copper alkylsulphonate such as copper methane sulphonate and hydrates of any of the aforementioned. Preferably, copper salts in the oxidations state +1 or +2 selected from the group consisting of copper nitrate, copper permanganate, copper periodate, copper chlorate, copper perchlorate and copper vanadate are used.

In one embodiment of the present invention, the etching solution comprises or consists of phosphoric acid, sulphuric acid, water and at least one oxidising agent suitable to oxidise an electrically nonconductive plastic surface selected from the group consisting of sources of chlorate ions, sources of perchlorate ions, sources of permanganate ions, sources of periodate ions, vanadium compounds and optionally, at least one sources of copper ions wherein the molar ratio of water to sulphuric acid in the etching solution ranges from 1/1 to 2/1 and wherein the concentration of sulphuric acid ranges from 5.29 mol/l to 8.50 mol/l sulphuric acid.

The etching solution according to the present invention shows superior stability compared to those etching solutions known in the art. Without being bound to theory, it is assumed by the inventors that the particularly high stability of the etching solution according to the invention and the high adhesion values of metal layers formed on electrically nonconductive plastic surfaces of articles treated therewith might be based on the specific amounts of sulphuric acid, phosphoric acid and water present in the etching solution. These particular concentrations therein may result in reduced water vapour absorption compared to etching solutions containing higher amounts of sulphuric acid and the specific molar ratios of water to sulphuric acid. Etching solutions using only phosphoric acid as acidic medium mostly do not result in sufficient adhesion strength values of metal layers formed on plastic surfaces treated with such solutions. Another explanation of the superior stability of the etching solution might be the density decrease due to water absorption. When water vapour is being absorbed from the surrounding atmosphere due to the hydroscopic properties of acids (in particular of sulphuric acid), the density of the etching solutions decreases which in turn results in reduced stability of the etching solution. Typically, if the density of the etching solution falls below 1.70 g/cm$^3$ the stability of the etching solution becomes insufficient. Due to the molar ratios of sulphuric acid and water present in the etching solution according to the invention the water absorption and thus density decrease is reduced which *inter alia* results in improved stability of the etching solution according to the invention.

The stability in terms of storage and use of the etching solution according to the present invention depends, *inter alia,* on the density and is sufficient in a density range of 1.7 to 1.82 g/ml, more particularly in the range of 1.72 to 1.8 g/ml (measured with a hydrometer).

The etching solution according to the present invention can be prepared by any means known in the art. Typically, concentrated sulphuric acid solution and concentrated phosphoric acid solution are being mixed in the desired ratios and the at least one oxidising agent is added thereto. Other concentrations of sulphuric acid solutions and phosphoric acid solutions can be used as long as the desired molar ratio of water to sulphuric acid is suitably adjusted. If the molar ratio of water to sulphuric acid is outside the desired ranges, the amount of water can be increased by adding water or lowered by adding desiccation agents (also referred to as drying agents) or by physical means. Desiccation agents are chemical compounds capable of removing water from liquid media by chemical means. Chemical means are to be understood in the context of the present invention as reactions whereby water is converted into another chemical compound and thus, the amount of water in the liquid media is reduced. Particularly suitable desiccation agents in the context of the present invention are phosphorous pentoxide ($P_2O_5$), oleum (fuming sulphuric acid, $H_2SO_4$ * y% $SO_3$ with y being a number typically ranging from 0 to 65) and the like. Pyrosulphuric acid (disulphuric acid, $H_2S_2O_7$) can be regarded in this case as oleum with the equimolar mixture of sulphur trioxide and sulphuric acid. Physical means are to be understood as methods which remove water from liquid media such as for example by an entrapment of water in a bead (molecular sieve) or by filtration (osmosis) resulting in lowered water amounts. Preferably, concentrated sulphuric acid solution (98 wt.-% sulphuric acid and the remainder being water) and concentrated phosphoric acid solution (85 wt.-% phosphoric acid and the remainder being water) are being mixed in such ratio allowing for the molar ratio of water to sulphuric acid to range from 1/1 to 2/1. Thus, the etching solution according to the invention is preferably free of any intentionally added water.

The amount of water in the etching solution according to the invention can be measured by means known in the art such as titration methods (in particular Karl-Fischer-titration).

The etching solution according to the invention can be used to treat electrically nonconductive plastic surfaces of articles. The etching solution according to the invention is preferably being used to treat electrically nonconductive plastic surfaces of articles prior to metallization.

An etching solution comprising phosphoric acid, sulphuric acid, water and at least one oxidising agent suitable to oxidise an nonconductive plastic surface which is further characterised in that the molar ratio of water to sulphuric acid in the etching solution ranges from 1/1 to 2/1 and wherein the concentration of sulphuric acid ranges from 5.29 mol/l to 8.50 mol/l sulphuric acid is used for the treatment of electrically nonconductive plastic surfaces. The etching solution is preferably used to treat said electrically nonconductive plastic surfaces prior to metallization.

The process for treating electrically nonconductive plastic surfaces of articles according to the invention comprises, in this order, the process steps of:

A) Providing an electrically nonconductive plastic surface;
B) Treating said electrically nonconductive plastic surface with the etching solution according to the invention.

Optionally, in order to metallize the electrically nonconductive plastic surface, the process comprises the following steps (to be performed after step B))

C) Treating said electrically nonconductive plastic surface with a solution of a metal, the metal being selected from the metals of transition group I of the Period Table of the Elements and transition group VIII of the Period Table of the Elements; and

D) Treating the plastic surface with a metallizing solution and thereby forming a metal or metal alloy layer on said plastic surface.

The process steps of the present invention are performed in the sequence specified, but not necessarily in immediate succession. It is possible for further process steps and additionally rinse steps in each case, preferably with water, to be performed between the steps.

Articles in the context of this invention are to be understood as articles which have been manufactured from at least one electrically nonconductive plastic or which have been covered partially or entirely with at least one layer of at least one electrically nonconductive plastic. The articles thus have surfaces of at least one electrically nonconductive plastic. Plastic surfaces are understood in the context of this invention to mean these said surfaces of the articles.

The plastic surfaces have been manufactured from at least one electrically non-conductive plastic. Preferably, the at least one electrically nonconductive plastic surface is selected from the group consisting of acrylonitrile-butadiene-styrene copolymer (ABS copolymer), polyamide (PA), polycarbonate (PC) and mixtures of ABS copolymers with at least one further polymer.

More preferably, the electrically nonconductive plastic is an ABS copolymer or a mixture of an ABS copolymer with at least one further polymer. The at least one further polymer is more preferably polycarbonate (PC), which means that particular preference is given to ABS/PC mixtures.

In one embodiment of the invention, process step A and/or B) may be preceded by performance of the following further process step:

- treatment of the rack with a solution comprising a source of iodate ions.

Such a treatment of the rack has been disclosed by WO 2013/135862 A2 (page 4, line 34 to page 5, line 11 and page 12, line 23 to page 14, line 27) which is hereby incorporated by reference. The treatment of the rack with a solution comprising a source for iodate ions is also referred to hereinafter as "protection of the rack". The protection of the rack can take place at various times during the process according to the invention. At this time, the articles are not yet fastened to the rack. The rack is thus treated alone, without the articles, with the solution comprising a source for iodate ions.

In a further embodiment of the invention, the further process step

- fastening of the one or more articles to one or more racks may be included between process steps A) and B). This further process step is referred to hereinafter as "fastening step". The fastening of the articles to racks enables the simultaneous treatment of a large number of articles with the successive solutions for the individual process steps, and the establishment of electrical contact connections during the last steps for electrolytic deposition of one or more metal layers. In this case, the articles may be dipped into the solutions either fastened to racks or accommodated in drums. Fastening to racks is preferred. The racks are generally themselves coated with plastic. The plastic is usually polyvinyl chloride (PVC). In a further embodiment of the invention, the protection of the rack can be performed prior to the fastening step.

In a preferred embodiment of the invention, process step A) is followed by performance of the following further process step:

A i) treating the plastic surface in an aqueous solution comprising at least one glycol compound.

This further process step is referred to hereinafter as "pretreatment step". This pretreatment step increases the adhesion strength between the plastic and the metal layer. Such pretreatment step has been disclosed in WO 2013/135864 A1 (page 6, line 10 to page 9, line 2) which is hereby incorporated by reference.

If process step B) has additionally been preceded by performance of the fastening step, the pretreatment step is performed between the fastening step and process step B). In a further embodiment of the invention, the protection of the rack can be performed between the fastening step and the pretreatment step. In a further embodiment of the invention, the protection of the rack can be performed between the pretreatment step and process step A).

Next, in step B), the electrically nonconductive plastic surface is treated with an etching solution according to the invention. This is referred to herein as "etching step" or "etching treatment". The etching solution according to the invention can be employed at temperatures between 15 °C or 25 °C and 90 °C. It has been found that sufficiently high adhesion strengths between metal layers and plastic surfaces can also be achieved at low temperatures between 15 °C or 25 °C and 55 °C which is preferable for cost-saving and ecological reaons. In those cases, however, where it is not possible to ensure that all solvent from the treatment with the glycol compound in the pretreatment step has been removed from the plastic surface, the temperatures in the downstream process step B) should be selected at a higher level, namely within the range from 55 °C to 90 °C, preferably within the range from 55 °C to 75 °C. The optimal treatment time depends on the plastic surface being treated and the selected temperature of the etching solution. For ABS and ABS/PC plastic surfaces, the best adhesion strength between plastic surface and subsequently applied metal layer is achieved at a treatment time between 1 and 30 minutes, preferably between 5 and 25 minutes and more preferably between 10 and 15 minutes. A longer treatment time than 30 minutes generally leads to no further improvement in the adhesion strengths.

It is possible within the scope of the invention to replenish the at least one oxidising agents present in the etching solution according to the invention. As the oxidising agents are being consumed in order to etch the plastic surface, it may be required to add more of the at least one oxidising agents after a prolonged use of the etching solution according to the invention. The consumption of the oxidising agent(s) can be monitored by standard analytical means such as spectroscopy and wet-chemical analytical methods such as titration. Exemplarily, the consumption of permanganate can be monitored using the green fluorescence of this compound.

In a further embodiment, the articles, after the etching step in process step B), are cleaned by rinsing off excess etching solution. The rinsing is effected in one or more, preferably three, rinsing steps with water.

In a further preferred embodiment of the invention, the following further process step is performed between process step B) and optional step C):

B i) treating the plastic surface in a solution comprising a reducing agent.

The further process step B i) is also referred to as "reducing treatment". This reducing treatment converts oxidising agents or reaction products obtained therefrom adhering to the plastic surfaces into water-soluble and thus removable compounds. A typical compound which is detrimental to subsequent steps is manganese dioxide formed from permanganate as oxidising agent. The reducing treatment is conducted after the etching step in process step B) and optionally after the rinsing. For this purpose, an acidic solution of a reducing agent is used. The reducing agent is typically selected from the group consisting of hydroxylammonium sulphate, hydroxylammonium chloride and hydrogen peroxide. Preference is given to an acidic solution of hydrogen peroxide because hydrogen peroxide is neither toxic nor complex-forming in a strong inorganic acid, preferably sulphuric acid. The content of hydrogen peroxide in the solution of the reducing treatment (reducing solution) is between 25 ml/l and 35 ml/l of a 30 wt.-% hydrogen peroxide solution, preferably 30 ml/l of a 30 wt.-% hydrogen peroxide solution in 50 to 100 g/l concentrated sulphuric acid solution. Such reducing treatment including useful parameters for its application in the process according to the invention has been disclosed in WO 2013/135862 A2 (page 11, line 9 to page 12, line 21) which is hereby included by reference. The reducing treatment removes manganese dioxide precipitates or other remnants of oxidising agents which disrupt further processing steps such as the metallization of the articles. Exemplarily, the reducing treatment of process step B i) promotes the homogeneous and continuous coverage of the articles with the desired metal layer and promotes the adhesion strength and smoothness of the metal layer applied to the articles.

The process of the present invention further optionally comprises process step C), wherein said electrically nonconductive plastic surface is treated with a solution of a metal, the metal being selected from the metals of transition group I of the Period Table of the Elements and transition group VIII of the Period Table of the Elements. The metal is either a metal colloid or a compound of a metal, typically contained in a solution. The metal of the metal colloid or the metal compound is selected from the group consisting of the metals of transition group I of the Periodic Table of the Elements (PTE) and transition group VIII of the Periodic Table of the Elements. The metal of transition group VIII of the PTE is selected from the group consisting of palladium, platinum, iridium, rhodium and a mixture of two or more of these metals. The metal of transition group I of the Periodic Table of the Elements (PTE) is selected from the group consisting of gold, silver and a mixture of these metals. Process step C) is referred to in the art and herein as "activation" or "activation step".

A preferred metal in the metal colloid is palladium. The metal colloid is stabilized with a protective colloid. The protective colloid is selected from the group consisting of metallic protective colloids and organic protective colloids. As a metallic protective colloid, preference is given to tin ions. The organic protective colloid is selected from the group consisting of polyvinyl alcohol, polyvinylpyrrolidone and gelatine, preferably polyvinyl alcohol.

In a preferred embodiment of the invention, the solution of the metal colloid in process step C) is an activator solution with a palladium/tin colloid. This colloid solution is obtained from a palladium salt, a tin(II) salt and an inorganic acid. A preferred palladium salt is palladium chloride. A preferred tin(II) salt is tin(II) chloride. The inorganic acid may be hydrochloric acid or sulphuric acid, preferably hydrochloric acid. The colloid solution forms through reduction of the palladium chloride to palladium with the aid of tin(II) chloride. The conversion of the palladium chloride to the colloid is complete; therefore, the colloid solution no longer contains any palladium chloride. The concentration of palladium is 5 mg/l - 100 mg/l, preferably 20 mg/l - 50 mg/l and more preferably 30 mg/l - 45 mg/l, based on $Pd^{2+}$. The concentration

of tin(II) chloride is 0.5 g/l - 10 g/l, preferably 1 g/l - 5 g/l and more preferably 2 g/l - 4 g/l, based on $Sn^{2+}$. The concentration of hydrochloric acid is 100 ml/l - 300 ml/l (37 wt.-% HCl). In addition, a palladium/tin colloid solution additionally comprises tin(IV) ions which form through oxidation of the tin(II) ions. The temperature of the colloid solution during process step B) is 20 °C - 50 °C and preferably 35 °C - 45 °C. The treatment time with the activator solution is 0.5 min - 10 min, preferably 2 min - 5 min and more preferably 3 min - 5 min.

In a further embodiment of the invention, in process step C), the solution of a compound of a metal is used in lieu of the metal colloid. The solution of a metal compound used is a solution comprising an acid and a metal salt. The metal in the metal salt consists in one or more of the above-listed metals of transition groups I and VIII of the PTE. The metal salt may be a palladium salt, preferably palladium chloride, palladium sulphate or palladium acetate, or a silver salt, preferably silver acetate. The acid is preferably hydrochloric acid. Alternatively, it is also possible to use a metal complex, for example a palladium complex such as a salt of a palladium-aminopyridine complex. The metal compound in process step C) is present in a concentration of 40 mg/l to 80 mg/l, based on the metal. The solution of the metal compound can be employed at a temperature of 25 °C to 70 °C, preferably at 25 °C to 45°C. The treatment time with the solution of a metal compound is 0.5 min - 10 min, preferably 2 min - 6 min and more preferably 3 min - 5 min.

Between process steps B) and C), the following further process step can be performed:

B ii) treating the plastic surface in an aqueous acidic solution.

Preference is given to performing process step B ii) between process steps B i) and C).

The treatment of the plastic surfaces in process step B ii) is also referred to as "preliminary dipping", and the aqueous acidic solution used as a "preliminary dipping solution". The preliminary dipping solution has the same composition as the colloid solution in process step C), without the presence of the metal in the colloid and the protective colloid thereof. The preliminary dipping solution, in the case of use of a palladium/tin colloid solution in process step C), comprises exclusively hydrochloric acid if the colloid solution likewise comprises hydrochloric acid. For preliminary dipping, brief immersion into the preliminary dipping solution at ambient temperature is sufficient. Without rinsing the plastic surfaces, they are treated further directly with the colloid solution of process step C) after the treatment in the preliminary dipping solution.

Process step B ii) is preferably performed when process step C) involves the treatment of a plastic surface with a solution of a metal colloid. Process step B ii) can also be performed when process step C) involves the treatment of a plastic surface with a solution of a compound of a metal.

After the treatment of the plastic surfaces with the metal colloid or the metal compound in process step C), they can be rinsed.

In a further embodiment of the invention, the following further process steps are performed between process steps C) and D):

C i) treating the plastic surface in an aqueous acidic solution ("accelerator step") or

C ii) treating the plastic surface with a reductor solution.

These further process steps C i) and C ii) are employed when the articles are to be metallized by an electroless metallization process, *i.e.* a first metal layer is to be applied to the plastic surfaces by an electroless process.

If the activation in process step C) has been performed with a metal colloid, the plastic surfaces are treated in process step C i) with an accelerator solution in order to remove constituents of the colloid in the colloid solution, for example a protective colloid, from the plastic surfaces. If the colloid in the colloid solution in process step C) is a palladium/tin colloid, the accelerator solution used is preferably an aqueous solution of an acid. The acid is selected, for example, from the group consisting of sulphuric acid, hydrochloric acid, citric acid and tetrafluoroboric acid. In the case of a palladium/tin colloid, the accelerator solution helps to remove the tin compounds which served as the protective colloid.

As an alternative to process step C i), process step C ii) may be included in the process according to the invention. Process step C ii) is a "reductor treatment" and is preferably performed if, in process step C), a solution of a metal compound has been used in place of a metal colloid for the activation. The reductor solution used for this purpose then comprises, if the solution of the metal compound was a hydrochloric acid solution of palladium chloride or an acidic solution of a silver salt, hydrochloric acid and tin(II) chloride. The reductor solution may also comprise another reducing agent, such as $NaH_2PO_2$, boranes or borohydrides such as an alkali metal borane, alkaline earth metal borane or dimethylaminoborane. Preference is given to using $NaH_2PO_2$ in the reductor solution. After the acceleration in process step C i) or the treatment with the reductor solution in process step C ii), the plastic surfaces may be rinsed prior to any other process steps.

In a further embodiment of the invention, the following further process step is performed between process steps C) and D):

C iii) electrolessly metallizing the plastic surface.

Process step C i) or C ii) and, optionally, one or more rinse steps can be followed by process step C iii) in which the plastic surfaces are metallized electrolessly. Electroless plating is to be understood as deposition of a metal without an external source of electrons like electrical currents but with the aid of a chemical reducing agent. Electroless nickel plating is accomplished, for example, using a conventional nickel bath which comprises, *inter alia,* a source of nickel ions such as nickel sulphate, a reducing agent such as sodium hypophosphite, and also organic complexing agents and pH adjusters (for example a buffer). The reducing agent used may likewise be dimethylaminoborane or a mixture of hypophosphite and dimethylaminoborane.

Alternatively, it is possible to use an electroless copper bath for electroless copper plating. The electroless copper bath typically comprises a copper salt (for example copper sulphate or copper hypophosphite), a reducing agent (for example formaldehyde or a hypophosphite salt such as the respective alkali metal or ammonium salts or hypophosphorous acid), and additionally one or more complexing agents such as tartaric acid, and also a pH adjuster such as sodium hydroxide.

The surface thus rendered conductive can subsequently be electrolytically further metallized in order to obtain a functional or decorative surface.

Optional step D) of the process according to the invention is the metallization of the plastic surface with a metallization solution. The metallization in process step D) can be performed electrolytically. For electrolytic metallization, it is possible to use any desired metal deposition baths, for example for deposition of nickel, copper, silver, gold, tin, zinc, iron, lead, chromium or alloys thereof. Such deposition baths are familiar to those skilled in the art. A Watts nickel bath is typically used as a bright nickel bath, this comprising nickel sulphate, nickel chloride and boric acid, and also saccharine as an additive. An example of a composition used as a bright copper bath is one comprising copper sulphate, sulphuric acid, sodium chloride and organic sulphur compounds wherein the sulphur is in a low oxidation state, for example organic sulphides or disulphides, as additives.

The effect of the metallization of the plastic surface in process step D) is that the plastic surface is coated with metal, the metal being selected from the above-listed metals for the deposition baths.

In a further embodiment of the invention, after process step D), the following further process step is performed:

D i) storage of the metallized plastic surface at elevated temperature.

As in all electroplating processes in which a non-conductive surface is coated by wet-chemical means with metal, the adhesion strength between metal and plastic substrate increases in the first period after the application of the metal layer. At room temperature, this process is complete after about three days. This can be accelerated considerably by storage at elevated temperature. The process is typically complete after about 5 minutes to one hour at 50 to 80 °C. It is assumed that the initially low adhesion strength is caused by a thin water layer which lies at the boundary between metal and nonconductive substrate and hinders the formation of electrostatic forces. The effect of the treatment or storage of the metallized plastic surfaces at elevated temperature is that an initial, relatively low adhesion strength is enhanced further, such that, after process step D i), an adhesion strength of the metal layer applied to the plastic surface which is within the desired range of at least or greater than 0.8 N/mm is achieved.

The process according to the invention thus enables, with good process reliability and excellent adhesion strength of the subsequently applied metal layers, achievement of metallization of electrically nonconductive plastic surfaces of articles. The adhesion strength of the metal layers applied to plastic surfaces reaches values of 0.8 N/mm or higher. In addition, not only planar plastic surfaces are metallized with high adhesion strength by the process according to the invention; instead, inhomogeneously shaped plastic surfaces, for example shower heads, are also provided with a homogeneous and strongly adhering metal coating. Another advantage of the etching solution according to the invention is its long life-time of more than 7 days and long-term usability non-equalled in the prior art.

## Examples

The non-limiting working examples described hereinafter are intended to illustrate the invention in detail.

Etching solutions #1 to #4

The etching solutions were prepared by mixing 98 wt.-% sulphuric acid (concentrated sulphuric acid solution) and 85 wt.-% phosphoric acid (concentrated phosphoric acid solution) prior to adding the oxidising agents. The compositions and the molar ratios of water to sulphuric acid of the individual etching solutions #1 to #5 are given in Table I.

Table I: Composition of etching solution #1 to #5.

| # | Composition | $n_{H2O}/n_{H2SO4}$ | $c (H_2SO_4)$ |
|---|---|---|---|
| 1 | 652 ml/l concentrated phosphoric acid solution, 348 ml/l concentrated sulphuric acid solution, 1 g/l $CuSO_4 \cdot H_2O$, 0.2 g/l $HVO_3$, 15 g/l $NaIO_4$, 2 g/l $KMnO_4$, 20 ml/l $HNO_3$ | 1.54 | 6.4 mol/l |
| 2 | 620 ml/l concentrated phosphoric acid solution, 380 ml/l concentrated sulphuric acid solution, 1 g/l $CuSO_4 \cdot H_2O$, 0.2 g/l $HVO_3$, 15 g/l $NaIO_4$, 1.5 g/l $NaClO_3$ | 1.36 | 7.0 mol/l |
| 3 | 577 ml/l concentrated phosphoric acid solution, 423 ml/l concentrated sulphuric acid solution, 1 g/l $CuSO_4 \cdot H_2O$, 0.1 g/l $HVO_3$, 15 g/l $NaIO_4$, 2 g/l $NaClO_3$ | 1.15 | 7.8 mol/l |
| 4 | 577 ml/l concentrated phosphoric acid solution, 423 ml/l concentrated sulphuric acid solution, 1 g/l $CuSO_4 \cdot H_2O$, 15 g/l $NaIO_4$, 2 g/l $NaClO_3$ | 1.15 | 7.8 mol/l |
| 5 | 625 ml/l concentrated phosphoric acid solution, 375 ml/l concentrated sulphuric acid solution, 1 g/l $NaClO_3$ | 1.38 | 6.89 mol/l |

<u>Example 1 to 5: Inventive examples</u>

Panels of ABS plastic (Novodur P2MC, from Ineos) having dimensions of 5.2 cm x 14.9 cm x 3 mm were fastened to a stainless steel wire. The panels were dipped for ten minutes into solutions of 15% 2-(2-ethoxyethoxy)ethyl acetate and 10% butoxyethanol which had been adjusted to pH = 7 with a potassium phosphate buffer and were kept at 45 °C in a thermostat (pretreatment step, step A i)). Subsequently, the panels were rinsed under running water for about one minute and then introduced into the etching solutions as summarized in Table I (process step B)). Table I gives the composition of etching solutions #1 to #5 (corresponding to example 1 to 5) including the molar ratio of water to sulphuric acid therein ($n_{H2O}/n_{H2SO4}$).

A treatment time of ten minutes at 30 °C was again followed by rinsing under water for one minute, the panels were cleaned to remove any residues left from the etching solution in a solution of 50 g/l 96 wt.-% sulphuric acid and 30 ml/l 30 wt.-% hydrogen peroxide (process step B i)). After subsequent rinsing and brief dipping into a solution of 300 ml/l 36 wt.-% hydrochloric acid (process step B ii)), the panels were activated in a colloidal activator based on a palladium colloid (Adhemax Aktivator PL from Atotech Deutschland GmbH, 25 mg/l of palladium) at 45 °C for three minutes (process step C)).

After subsequent rinsing, the protective shells of the palladium particles were removed at 50 °C for five minutes (Adhemax ACC1 accelerator from Atotech Deutschland GmbH, process step C i)). The panels were subsequently nickel-plated at 45 °C without external current for ten minutes (Adhemax LFS, from Atotech Deutschland GmbH, process step C ii)), rinsed and copper-plated at 3.5 A/dm² at room temperature for 70 minutes (Cupracid HT, from Atotech Deutschland GmbH, process step D)). After rinsing, the panels were stored at 80 °C for 30 minutes (process step D i)). Subsequently, a knife was used to cut out a strip of the metallized plastic panel of width about 1 cm, and a tensile tester (from Instron GmbH) was used to pull off the metal layer from the plastic (ASTM B 533 1985, Reapproved 2009). The adhesion strength values are given in Table II.

The etching solutions #1 to #5 given in Table I were used and stored over a period of up to 14 days and used in above-described process repeatedly. The etching properties in dependence of storage time were thus assessed.

Table II: Adhesion strength values [N/mm] obtained over maturing time of etching solutions of Table I

| Storage time | #1 | #2 | #3 | #4 | #5 |
|---|---|---|---|---|---|
| After make-up | 0.8 | 0.8 | 0.85 (5 min) 0.9 (15 min) | 0.9 (5 min) 0.9 (15 min) | 0.7 |
| Day 3 | 0.8 | 0.8 | 0.4-0.5 | 0.4-0.5 | 0.5 |
| Day 4 | 0.9[1] | 0.8 1.0[2] | | | |
| Day 5 | 0.8 | 0.9 | 1.0[2] | 0.6-0.7[2] | 0.5 |
| Day 6 | 0.8 | 0.9 | 1.0[3] | 0.6-0.7[3] | 0.9[5] |
| Day 7 | 0.8 | 0.9 | 1.2[4] | 1.0[4] | 0.9 |

(continued)

| Storage time | #1 | #2 | #3 | #4 | #5 |
|---|---|---|---|---|---|
| Day 8 | 0.8 | 0.9 | 1.0 | 0.8-0.9 | 0.7 |
| Day 10 | 0.0 | 0.8 | | | 0.8[5)] |
| Day 13 | - | | 1.0 | 0.9 | |
| Day 14 | - | | 0.9-1.0 | 0.8-0.9 | |

[1)] after addition of 4 g/l $KMnO_4$, [2)] after addition of 2 g/l $NaClO_3$, [3)] after addition of 0.4 g/l $KMnO_4$ and 2 g/l $NaClO_3$, [4)] after addition of 1 g/l $KMnO_4$, [2)] after addition of 1 g/l $NaClO_3$

The metal layers formed on plastic surfaces treated with the etching solution #1 in Table I showed good adhesion values and full coverage of the surface with metal. Even after a prolonged use of one week the adhesion values were sufficiently high. However, the etching solution #1 did not allow for sufficiently strong adhering metal layers to be formed after 10 days of use and storage.

Etching solution #2 had a lower molar ratio of water to sulphuric acid compared to etching solution #1. The adhesion strength values of metal layers formed on plastic surfaces treated with etching solution #2 were even after ten days sufficiently high.

Etching solution #3 and etching solution #4 had the same molar ratio of water to sulphuric acid which was lower than the molar ratios of etching solutions #1 and #2. The adhesion values of metal layers on plastic surfaces etched therewith was sufficiently high over a use period of 14 days. However, etching solution #3 containing up to three different oxidising agents showed a superior adhesion compared to etching solution #4 which did not contain vanadates (and thus, only two oxidising agents).

Etching solution #5 only used one oxidising agent, namely a source of chlorate ions. The adhesion strength values obtained were good but replenishment of the oxidising agent was already required after 3 days of used. The etching solution was useable for at least 10 days giving good adhesion strength values albeit sometimes slightly inferior to the etching solutions comprising more than one oxidising agent.

Comparative examples C1-C4

The process described in Examples 1-5 was repeated with the etching solutions C1 to C4 known from the art (see Table III). The etching solutions were used directly after make-up and after one week of storage where appropriate. The adhesion strength of such treated plastic surfaces was measured. The results are summarized in Table III.

Table III: Compositions of comparative etching solutions C1 to C4.

| # | Composition | $n_{H2O}/n_{H2SO4}$ | $n_{H2SO4}$ | Adhesion after make-up [N/mm] | Adhesion after 1 week [N/mm] |
|---|---|---|---|---|---|
| C1 | 500 ml/l concentrated phosphoric acid solution, 500 ml/l concentrated sulphuric acid solution, 1 g/l $CuSO_4 \cdot H_2O$, 15 g/l $NaIO_4$, 2 g/l $KMnO_4$ | 0.87 | 9.2 | < 0.2 | -[7)] |
| C2 | 732 ml/l concentrated phosphoric acid solution, 238 ml/l concentrated sulphuric acid solution, 1 g/l $CuSO_4 \cdot H_2O$, 15 g/l $NaIO_4$, 2 g/l $KMnO_4$ | 2.2 | 4.4 | 0.2 | -[7)] |
| C3 | 400 ml/l concentrated phosphoric acid solution, 500 ml/l concentrated sulphuric acid solution, 100 ml/l water, 2 g/l $NaClO_3$ | 1.26 | 9.2 | 0.5 | 0 |
| C4 | 300 g/l sulphuric acid, 5 g/l $KBrO_3$, 0.5 g/l $KMnO_4$ [6)] | ~ 12.7/1 | 3.1 | < 0.4 | -[7)] |

(continued)

| # | Composition | $n_{H2O}/n_{H2SO4}$ | $n_{H2SO4}$ | Adhesion after make-up [N/mm] | Adhesion after 1 week [N/mm] |
|---|---|---|---|---|---|
| C5 | 833 g/l sulphuric acid, 5 g/l KBrO$_3$, 0.5 g/l KMnO$_4$ (method of EP 2 009 142 B8)[6] | 4.1 | 8.5 | 0.25 | -[7] |
| [5] Method according to WO 2013/182590, [6] method according to EP 2 009 142 B8, the solutions did not contain any phosphoric acid, [7] not tested because initial adhesion strength already insufficient. | | | | | |

Comparative example C1 contained a higher amount of sulphuric acid than 8.50 mol/l and the ratio of water to sulphuric acid was below 1/1. The adhesion strength of a plastic surface treated with a freshly made-up etching solution of C1 and a subsequent metal layer formed thereon was below 0.2 N/mm and thus insufficient. Further tests were omitted, as the initial values were already insufficient.

Comparative example C2 contained a lower amount of sulphuric acid than 5.29 mol/l and the ratio of water to sulphuric acid was above 2/1. The adhesion strength of a plastic surface treated with freshly made-up etching solution of C2 and a subsequent metal layer formed thereon was 0.2 N/mm and thus insufficient. Further tests were omitted, as the initial values were already insufficient.

Comparative example C3 contained a higher amount of sulphuric acid than 8.50 mol/l. The adhesion strength of a plastic surface treated with a freshly made-up etching solution of C3 and a subsequent metal layer formed thereon was 0.5 N/mm. However, after one week of storage of the etching solution of C3 the adhesion of a plastic surface treated therewith became too low to be measured.

Comparative example C4 contained no phosphoric acid. The adhesion strength of a plastic surface treated with a freshly made-up etching solution of C4 and a subsequent metal layer formed thereon was below 0.4 N/mm and thus insufficient. Further tests were omitted, as the initial values were already insufficient. Comparative example C5 contained no phosphoric acid but sulphuric acid in a concentration of 8.50 mol/l but the ratio of water to sulphuric acid was higher than 2/1. The adhesion strength of a plastic surface treated with a freshly made-up etching solution of C5 and a subsequent metal layer formed thereon was 0.25 N/mm and thus insufficient. Further tests were omitted, as the initial values were already insufficient.

Other embodiments of the present invention will be apparent to those skilled in the art from a consideration of this specification or practice of the invention disclosed herein. It is intended that the specification and examples be considered as exemplary only, with the true scope of the invention being defined by the following claims only.

**Claims**

1. An etching solution for treating electrically nonconductive plastic surfaces of articles comprising phosphoric acid, sulphuric acid, water and at least one oxidising agent suitable to oxidise an electrically nonconductive plastic surface **characterised in that** the molar ratio of water to sulphuric acid in the etching solution ranges from 1/1 to 2/1 and wherein the concentration of sulphuric acid ranges from 5.29 mol/l to 8.50 mol/l.

2. The etching solution according to claim 1 **characterised in that** the etching solution comprises 8.50 to 10.58 mol/l water.

3. The etching solution according to claim 1 or 2 **characterised in that** the molar ratio of water to sulphuric acid in the etching solution ranges from 1/1 to 1.6/1.

4. The etching solution according to any one of the preceding claims **characterised in that** the concentration of phosphoric acid ranges from 7.8 to 10.4 mol/l.

5. The etching solution according to any one of the preceding claims **characterised in that** the at least one oxidising agent is selected from the group consisting of sources of halogen oxo ions of the formula $XO_n^-$ wherein X is a halogen atom selected from chlorine, bromine, iodine and n is an integer ranging from 1 to 4, sources of permanganate ions, sources of nitrate, vanadium compounds, sources of persulphate, sources of peroxodiphosphate, sources of molybdates and sources of bismuthates.

6. The etching solution according to claim 6 **characterised in that** the at least one oxidising agent is selected from the group consisting of sources of chlorate ions, sources of permanganate ions, sources of periodate ions, sources of perchlorate ions and vanadium compounds.

7. The etching solution according to any of claims 5 or 6 **characterised in that** it comprises two or more oxidising agents.

8. The etching solution according to claim 7 **characterised in that** at least one of the oxidising agents is selected from the group consisting of sources of chlorate ions, sources of perchlorate ions, sources of permanganate ions, sources of periodate ions and vanadium compounds.

9. The etching solution according to any of claims 7 or 8 **characterised in that** it comprises at least one source of chlorate ions and a second oxidising agent selected from sources of perchlorate ions, sources of permanganate ions, sources of periodate ions and vanadium compounds.

10. The etching solution according to any one of the preceding claims **characterised in that** it comprises at least one source of copper ions.

11. The etching solution according to any one of the preceding claims **characterised in that** it is free of intentionally added hexavalent chromium compounds.

12. Use of an etching solution comprising phosphoric acid, sulphuric acid, water and at least one one oxidising agent suitable to oxidise an electrically nonconductive plastic surface which is further **characterised in that** the molar ratio of water to sulphuric acid in the etching solution ranges from 1/1 to 2/1 and wherein the concentration of sulphuric acid ranges from 5.29 mol/l to 8.50 mol/l sulphuric acid for the treatment of nonconductive plastic surfaces.

13. The process for treating electrically nonconductive plastic surfaces of articles according to the invention comprises, in this order, the process steps of:

   A) Providing an electrically nonconductive plastic surface;
   B) Treating said electrically nonconductive plastic surface with an etching solution according any one of claims 1 to 11.

14. The process according to claim 13 **characterised in that** at least one electrically nonconductive plastic surface is selected from the group consisting of an acrylonitrile-butadiene-styrene copolymer (ABS copolymer), a polyamide (PA), a polycarbonate (PC) and a mixture of an ABS copolymer with at least one further polymer.

15. The process according to claim 13 or 14 **characterised in that** it comprises the steps

   C) Treating said electrically nonconductive plastic surface with a solution of a metal, the metal being selected from the metals of transition group I of the Period Table of the Elements and transition group VIII of the Period Table of the Elements; and
   D) Treating the plastic surface with a metallizing solution and thereby forming a metal or metal alloy layer on said plastic surface.

Europäisches Patentamt
European Patent Office
Office européen des brevets

# EUROPEAN SEARCH REPORT

**Application Number**

EP 15 20 1063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 199 04 665 A1 (LPW CHEMIE GMBH [DE]) 10 August 2000 (2000-08-10) | 1-6, 10-15 | INV. C23C18/24 C09K13/04 |
| Y | * column 1, lines 14-22; example 1 * | 7-9 | |
| X | US 2015/344777 A1 (NAGAMINE SHINGO [JP] ET AL) 3 December 2015 (2015-12-03) * paragraphs [0088] - [0096]; example 5; table 1 * | 1,5,6, 11-15 | |
| X | US 2008/064223 A1 (EGUCHI KATSUYA [JP] ET AL) 13 March 2008 (2008-03-13) * paragraphs [0003], [0062], [0075] * | 1,3 | |
| X | US 3 592 680 A (BAYER RAYMOND P) 13 July 1971 (1971-07-13) * column 2, lines 19-33; example II * | 1,12,13, 15 | |
| Y,D | US 2015/307992 A1 (NARUSKEVICIUS LEONAS [LT] ET AL) 29 October 2015 (2015-10-29) * paragraphs [0015] - [0040] * | 7-9 | |
| A,D | US 2015/129540 A1 (NARUSKEVICIUS LEONAS [LT] ET AL) 14 May 2015 (2015-05-14) * the whole document * | 1-15 | TECHNICAL FIELDS SEARCHED (IPC) C23C C09K |
| A,D | EP 2 009 142 A1 (OKUNO CHEM IND CO [JP]) 31 December 2008 (2008-12-31) * the whole document * | 1-15 | |

The present search report has been drawn up for all claims

| Place of search | Date of completion of the search | Examiner |
|---|---|---|
| The Hague | 30 June 2016 | Suárez Ramón, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 20 1063

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2016

| Patent document cited in search report | | Publication date | Patent family member(s) | | Publication date |
|---|---|---|---|---|---|
| DE 19904665 | A1 | 10-08-2000 | NONE | | |
| US 2015344777 | A1 | 03-12-2015 | CN | 104995336 A | 21-10-2015 |
| | | | EP | 2937446 A1 | 28-10-2015 |
| | | | HK | 1211325 A1 | 20-05-2016 |
| | | | JP | 5830807 B2 | 09-12-2015 |
| | | | KR | 20150126593 A | 12-11-2015 |
| | | | US | 2015344777 A1 | 03-12-2015 |
| | | | WO | 2015060196 A1 | 30-04-2015 |
| US 2008064223 | A1 | 13-03-2008 | JP | 4799332 B2 | 26-10-2011 |
| | | | JP | 2008071801 A | 27-03-2008 |
| | | | KR | 20080024080 A | 17-03-2008 |
| | | | TW | 200814181 A | 16-03-2008 |
| | | | US | 2008064223 A1 | 13-03-2008 |
| US 3592680 | A | 13-07-1971 | NONE | | |
| US 2015307992 | A1 | 29-10-2015 | CA | 2893664 A1 | 12-06-2014 |
| | | | CN | 104854216 A | 19-08-2015 |
| | | | EP | 2928984 A1 | 14-10-2015 |
| | | | JP | 2015537122 A | 24-12-2015 |
| | | | KR | 20150093214 A | 17-08-2015 |
| | | | LT | 6070 B | 25-09-2014 |
| | | | US | 2015307992 A1 | 29-10-2015 |
| | | | WO | 2014087004 A1 | 12-06-2014 |
| US 2015129540 | A1 | 14-05-2015 | CA | 2875323 A1 | 12-12-2013 |
| | | | CN | 104364421 A | 18-02-2015 |
| | | | EP | 2855731 A1 | 08-04-2015 |
| | | | ES | 2575001 T3 | 23-06-2016 |
| | | | JP | 2015518924 A | 06-07-2015 |
| | | | KR | 20150024327 A | 06-03-2015 |
| | | | LT | 5997 B | 25-02-2014 |
| | | | US | 2015129540 A1 | 14-05-2015 |
| | | | WO | 2013182590 A1 | 12-12-2013 |
| EP 2009142 | A1 | 31-12-2008 | EP | 2009142 A1 | 31-12-2008 |
| | | | HK | 1125418 A1 | 15-11-2013 |
| | | | JP | 5177426 B2 | 03-04-2013 |
| | | | US | 2009092757 A1 | 09-04-2009 |
| | | | WO | 2007122869 A1 | 01-11-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19611137 A1
- US 4629636 A
- EP 1001052 A
- WO 2009023628 A2
- WO 2013135864 A
- EP 2009142 B8
- WO 2013182590 A
- WO 2014087004 A
- WO 2013135862 A2
- WO 2013135864 A1